# EUROPEAN PATENT APPLICATION

(11) **EP 4 800 663 A1**
(43) Date of publication of application: **02.09.2026**
(21) Application number: 24881514.4
(22) Date of filing: 17.10.2024
(51) Int. Cl.: G06V 20/50, G06V 40/10, G06V 10/44, G06V 10/764

(54) **PICTURE DETECTION METHOD, DEVICE, AND COMPUTER STORAGE MEDIUM**

(30) Priority: 25.10.2023 CN 202311396792
(71) Applicant: Hangzhou Alibaba International Internet Industry Co., Ltd., Hangzhou, Zhejiang 310052 (CN)
(72) Inventor: ZHAN, Yian, Hangzhou, Zhejiang 310052 (CN); LI, Ting, Hangzhou, Zhejiang 310052 (CN); SUN, Yu, Hangzhou, Zhejiang 310052 (CN)
(74) Representative: Wu, Ting
(86) International application number: PCT/CN2024/125610
(87) International publication number: WO 2025/087149

(57) **Abstract**

Embodiments of the present specification provide an image detection method, device, and computer storage medium. In a scenario of detecting whether an image is an image of the target type, a category label library may be pre-constructed based on the characteristics of images of the target type, and for each category label in the category label library, a probability threshold for that category label may be determined based on the accuracy rate of prediction results of the target detection model on a large number of sample images. By pre-setting, for each category label in the category label library, a probability threshold adapted to that category label, the target detection model achieves higher accuracy when detecting images of the target type, thereby reducing the occurrence of false detections or missed detections. Moreover, the probability threshold corresponding to each category label can be adjusted based on the accuracy rate of the prediction results of the target detection model, so that users can adjust the strictness of the detection criteria based on actual needs, making image detection more flexible.

## Description

This disclosure claims priority to the Chinese patent application filed with the China National Intellectual Property Administration on October 25, 2023, with application number 202311396792.4, and entitled "Image Detection Method, Device, and Computer Storage Medium", the entire contents of which are incorporated herein by reference.

### TECHNICAL FIELD

The embodiments of the present specification relate to the technical field of image processing, and more particularly to an image detection method, apparatus, and computer storage medium.

### BACKGROUND

In many scenarios, it is necessary to detect images to determine whether an image is a specific type of image. Currently, when detecting image content, some target detection models are typically used to detect images, and the target detection model can output the probability that an image contains objects of multiple preset categories. For example, after an image is input into the target detection model, the target detection model can output the probability that the image contains objects such as persons, houses, vehicles, and trees. If the probability is greater than a preset probability threshold, the image is considered to contain the aforementioned objects. Currently, when setting the probability threshold, a single unified probability threshold is typically set for all objects. For example, the probability threshold is set to 80%. If the target detection model outputs a probability greater than 80% that the image contains a person, the image is considered to contain a person. Similarly, for objects of other categories, such as houses and vehicles, if the target detection model outputs a probability greater than 80% that the image contains houses or vehicles, the image is considered to contain houses or vehicles.

However, for different objects, since the difficulty of recognition by the target detection model varies, using a unified probability threshold as the evaluation criterion may cause inconsistent recognition accuracy of the target detection model for objects of different categories, resulting in some categories of objects having excessively low recognition accuracy. Furthermore, in the related art, probability thresholds are mostly set based on human experience, making it difficult to control the determination criteria of the target detection model. This makes it easy to encounter problems when detecting a specific type of image: either the determination criteria are too strict, causing too many images that do not belong to the specific type to be screened out, or the determination criteria are too lenient, causing too many images that belong to the specific type to go undetected, resulting in excessive false detections and missed detections.

### SUMMARY

To overcome the problems existing in the related art, the embodiments of the present specification provide an image detection method, apparatus, and computer storage medium.

According to a first aspect of the embodiments of the present specification, an image detection method is provided, the method comprising:
acquiring an image to be detected;
using a target detection model to predict a prediction probability that the image to be detected contains an object indicated by a category label in a preset category label library;
if the prediction probability is greater than a probability threshold corresponding to the category label, then determining that the image to be detected is an image of a target type;
where each category label in the category label library corresponds to one probability threshold, the probability threshold corresponding to each category label is set based on an accuracy rate of prediction results of the target detection model on a plurality of sample images, and for each category label, when the probability predicted by the target detection model that any sample image contains the object indicated by the category label is greater than the probability threshold corresponding to that category label, if it is determined that the sample image contains the object indicated by the category label, then the accuracy rate of the prediction results of the target detection model on the plurality of sample images is greater than a preset accuracy threshold.

According to a second aspect of the embodiments of the present specification, an image detection method is provided, the method comprising:
acquiring an image to be detected;
using an image-text conversion model to obtain a text description of the image to be detected;
determining, based on the text description, whether the image to be detected includes a target object;
if yes, using a target detection model to predict a prediction probability that the image to be detected includes an object of the first category, and in the case where the prediction probability is greater than a preset probability threshold, determining that the image to be detected is an image of a target type;
wherein a proportion of the object of the first category in the image to be detected is less than a preset first proportion, and the image to be detected including the target object is a prerequisite for the image to be detected including the object of the first category.

According to a third aspect of the embodiments of the present specification, there is provided an electronic device comprising a processor, a memory, and a computer program stored in the memory and executable by the processor, where the computer program, when executed, implements the method referred to in the first aspect and/or the second aspect above.

According to a fourth aspect of the embodiments of the present specification, there is provided a computer storage medium having a computer program stored thereon, where the computer program, when executed by a processor, implements the method referred to in the first aspect and/or the second aspect above.

According to a fifth aspect of the embodiments of the present specification, there is provided a computer program product comprising a computer program, where the computer program, when executed by a processor, implements the method referred to in the first aspect and/or the second aspect above.

Beneficial effects of the embodiments of the present specification: in the scenario of detecting whether an image is an image of the target type, a category label library may be pre-constructed based on the characteristics of images of the target type, and the category label library may include one or more category labels, that is, when an image includes an object indicated by any category label in the category label library, the image may be determined to be an image of the target type. Here, in order to ensure that the target detection model has a relatively accurate recognition rate when recognizing objects under each category label, for each category label, a probability threshold corresponding to the category label may be pre-determined. The probability threshold for each category label may be adjusted based on the accuracy rate of prediction results of the target detection model on a large number of sample images; for example, if the determination criterion is that the probability predicted by the target detection model that a sample image contains the object indicated by the category label is greater than the probability threshold corresponding to the category label, then under this determination criterion, the accuracy rate of the prediction results of the target detection model on these sample images is greater than the preset accuracy threshold. By pre-setting an adapted probability threshold for each category label in the category label library, the target detection model achieves higher accuracy when detecting images of the target type, thereby reducing the occurrence of false detections or missed detections. Moreover, the probability threshold corresponding to each category label can be adjusted based on the accuracy rate of the prediction results of the target detection model, so that users can adjust the strictness of the detection criteria based on actual needs, making image detection more flexible.

It should be understood that the foregoing general description and the following detailed description are exemplary and explanatory only and do not limit the embodiments of the present specification.

### BRIEF DESCRIPTION OF THE DRAWINGS

The accompanying drawings, which are incorporated in and constitute a part of the embodiments of the present specification, illustrate embodiments consistent with the embodiments of the present specification and, together with the specification, serve to explain the principles of the embodiments of the present specification.
FIG. 1 is a schematic diagram of detecting an image using target detection;
FIG. 2 is a schematic diagram of an image detection method illustrated by an exemplary embodiment of the present specification;
FIG. 3 is a schematic diagram of an application scenario illustrated by an exemplary embodiment of the present specification;
FIG. 4 is a flowchart of an image detection method illustrated by an exemplary embodiment of the present specification;
FIG. 5 is a schematic diagram illustrating detection of an image using a combination of an image-text conversion model and a target detection model, as illustrated by an exemplary embodiment of the present specification;
FIG. 6 is a schematic diagram of constructing a category label library, as illustrated by an exemplary embodiment of the present specification;
FIG. 7 is a logical block diagram of an electronic device illustrated by an exemplary embodiment of the present specification.

### DETAILED DESCRIPTION OF EMBODIMENTS

Exemplary embodiments will be described in detail herein, with examples thereof shown in the accompanying drawings. When the following description refers to the drawings, unless otherwise indicated, the same numerals in different drawings represent the same or similar elements. The implementations described in the following exemplary embodiments do not represent all implementations consistent with the embodiments of the present specification. Rather, they are merely examples of apparatuses and methods consistent with some aspects of the embodiments of the present specification, as detailed in the appended claims.

The terminology used in the embodiments of the present specification is for the purpose of describing particular embodiments only and is not intended to limit the embodiments of the present specification. The singular forms "a," "the," and "said" as used in the embodiments of the present specification and the appended claims are also intended to include plural forms, unless the context clearly indicates otherwise. It should also be understood that the term "and/or" as used herein refers to and includes any and all possible combinations of one or more of the associated listed items.

It should be understood that although the terms first, second, third, etc. may be used in the embodiments of the present specification to describe various information, the information should not be limited to these terms. These terms are only used to distinguish information of the same type from each other. For example, without departing from the scope of the embodiments of the present specification, first information may also be referred to as second information, and similarly, second information may also be referred to as first information. Depending on the context, the word "if" as used herein may be interpreted as "at the time of" or "when" or "in response to determining."

In many scenarios, it is necessary to detect images to determine whether an image is of a certain specific type. For example, in order to promote products or services, advertisement images may be displayed on certain applications or websites. To prevent advertisement images from containing certain non-compliant content, such as content involving violence or indecent scenes, these advertisement images may be detected prior to display to determine whether they are non-compliant images containing the aforementioned non-compliant content, and if so, their display is prohibited.

In general, when determining whether an image is of a certain specific type, the content of the image is typically detected to determine whether the image includes objects of certain categories, and thereby determine whether it is an image of a specific type. Taking the detection of non-compliant images as an example, if an image includes firearms, powdery substances, or certain excessively exposed body parts, it may be identified as a non-compliant image.

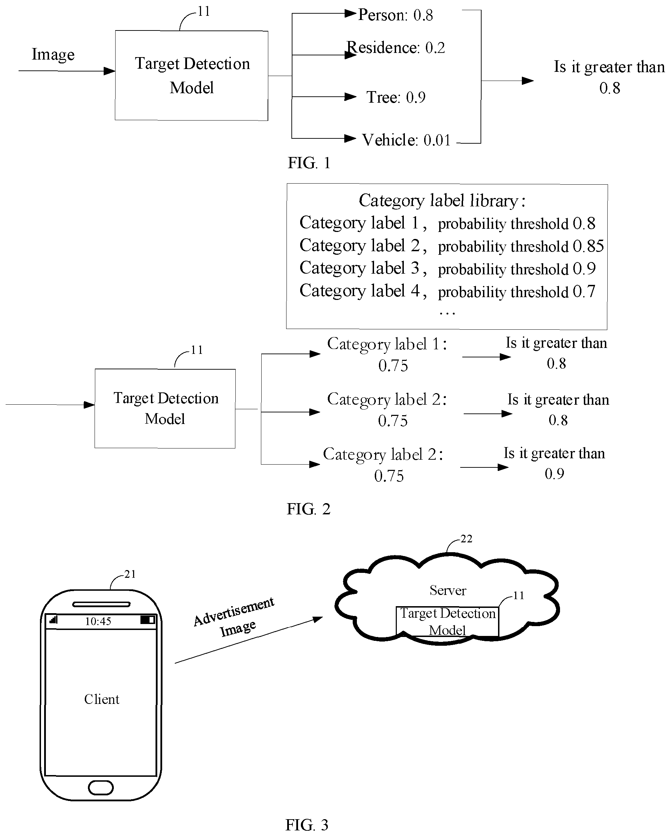

Currently, when detecting image content, some target detection models are typically used to detect images, and the target detection model can output the probability that the image contains objects of various preset categories. For example, as shown in FIG. 1, after an image is input to the target detection model 11, the target detection model 11 can output the probability that the image contains objects such as persons, houses, vehicles, trees, etc. If the probability is greater than a certain preset probability threshold, the image is considered to contain the aforementioned objects. Currently, when setting the probability threshold, a single probability threshold is uniformly set for all objects. For example, the probability threshold is set to 80%. If the target detection model 11 outputs a probability greater than 80% that the image contains a person, the image is considered to contain a person. Similarly, for objects of other categories, such as houses and vehicles, if the target detection model 11 outputs a probability greater than 80% that the image contains houses and vehicles, the image is considered to contain houses and vehicles. However, for different objects, since the target detection model 11 has varying difficulty in recognizing different objects, using a uniform probability threshold as the evaluation criterion may result in inconsistent recognition accuracy of the target detection model 11 for objects of different categories, causing the recognition accuracy for objects of certain categories to be too low. Furthermore, in related technologies, probability thresholds are mostly set based on human experience, making it difficult to control the determination criteria of the target detection model 11, and it is easy to encounter problems when detecting a certain specific type of image - either the determination criteria are too strict, causing too many images that do not belong to the specific type to be filtered out, or the determination criteria are too lenient, causing too many images that belong to the specific type to go unrecognized, resulting in excessive false detections and missed detections.

Based on this, embodiments of the present disclosure provide an image detection method. As shown in FIG. 2, in the scenario of detecting whether an image is an image of the target type, a category label library may be pre-constructed based on the characteristics of images of the target type, and the category label library may include one or more category labels, that is, when an image includes an object indicated by any category label in the category label library, the image may be determined to be an image of the target type. Here, in order to ensure that the target detection model 11 has a relatively accurate recognition rate when recognizing objects under each category label, for each category label, a probability threshold corresponding to the category label may be pre-determined. The probability threshold for each category label may be adjusted based on the accuracy rate of prediction results of the target detection model 11 on a large number of sample images; for example, if the determination criterion is that the probability predicted by the target detection model 11 that a sample image contains the object indicated by the category label is greater than the probability threshold corresponding to the category label, then under this determination criterion, the accuracy rate of the prediction results of the target detection model 11 on these sample images is greater than the preset accuracy threshold.

By pre-setting a probability threshold adapted to each category label , in the category label library, the target detection model 11 achieves higher accuracy when detecting images of the target type, and, can reduce the phenomenon of false detections or missed detections. Moreover, the probability threshold corresponding to each category label can be adjusted based on the accuracy of the prediction results of the target detection model 11, so that users can adjust the strictness of the detection criteria based on actual needs, making image detection more flexible.

The image detection method of the embodiments of the present disclosure may be executed by various terminal devices such as mobile phones, tablets, computers, and the like, and may also be executed by a server or a server cluster. For example, a terminal device may detect an image before displaying it, or alternatively, when a terminal device sends an image display request to a server, the server may detect the image to be displayed, and after determining that the image is not an image of the target type, then send it to the terminal device for display. For example, as shown in FIG. 3, which is a schematic diagram of an application scenario of an embodiment of the present disclosure, taking an e-commerce product's overseas business scenario as an example, merchants typically provide advertising materials for their products, these materials often include a large number of images, since the placement of overseas advertisements imposes certain requirements on advertising images, for example, the placement of non-compliant images involving violence, firearms, and the like is prohibited. Therefore, before placing the advertising images of these merchants, a third-party e-commerce platform may detect these advertising images to filter out certain non-compliant images. For example, merchants may upload these advertising images through the client 21 of the third-party e-commerce platform, and the client 21 sends the advertising images to the server 22 of the third-party e-commerce platform. The target detection model 11 may be deployed in the server 22 to detect whether these advertising images are non-compliant images through the target detection model 11, and if so, the placement of such advertising images is rejected. Of course, the above application scenario is merely an illustrative example, and the image detection solution provided by the embodiments of the present disclosure is not limited to the above scenario, and is applicable to all image detection scenarios.

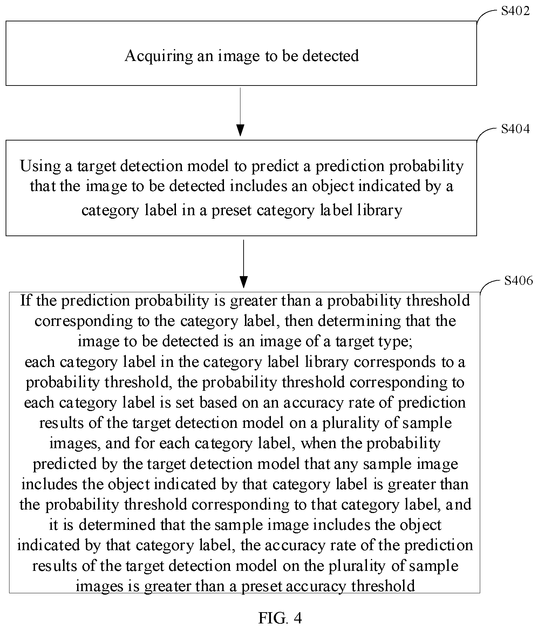

As shown in FIG. 4, the image detection method according to the embodiments of the present disclosure may include the following steps:
S402: acquiring an image to be detected;
in step S402, an image to be detected may be acquired, where the image to be detected may be various types of images that need to be detected, and the embodiments of the present disclosure do not impose any limitation thereon.
S404: using the target detection model 11 to predict the prediction probability that the image to be detected includes the object indicated by a category label in a preset category label library;
in step S404, after acquiring the image to be detected, the target detection model 11 may be used to detect the image to be detected to predict the prediction probability that the image includes the object indicated by a category label in the category label library. Here, considering that when an image typically includes objects of certain categories, it is determined to be an image of a certain target type, the category label library may be pre-constructed based on the characteristics of images of the target type, i.e., which categories of objects they include, and the category label library may include one or more category labels. That is, when an image includes the object indicated by a category label in the category label library, the image is an image of the target type.

Taking images of the target type being non-compliant images as an example, considering that non-compliant images include multiple categories, such as violent images including firearms and weapons, illegal images including drugs, and indecent images including excessively exposed body parts, etc., the category label library may be constructed based on the content included in non-compliant images. The category label library may include the following category labels: firearms, powder, exposed specific body parts, etc. It is then determined whether the image to be detected includes the object indicated by the aforementioned category labels, and if so, the image to be detected may be determined to be a non-compliant image.

The target detection model 11 may be various pre-trained open-source object detection models, such as the BLIP-2 (Bootstrapping Language-Image Pre-training) model, the Faster R-CNN (Faster Region-based Convolutional Neural Network) model, or may be a target detection model 11 trained using sample images, as long as it has the capability of object detection; the embodiments of the present disclosure do not impose any limitation thereon.

S406: if the prediction probability is greater than the probability threshold corresponding to the category label, then determining that the image to be detected is an image of the target type;
Here, each category label in the category label library corresponds to a probability threshold, the probability threshold corresponding to each category label is set based on the accuracy rate of the prediction results of the target detection model 11 on a plurality of sample images, and for each category label, when the probability predicted by the target detection model 11 that any sample image includes the object indicated by that category label is greater than the probability threshold corresponding to that category label, and it is determined that the sample image includes the object indicated by that category label, the accuracy rate of the prediction results of the target detection model 11 on the plurality of sample images is greater than the preset accuracy threshold.

In step S406, in order to ensure the accuracy of the target detection model 11 in recognizing objects indicated by various category labels, after constructing the category label library based on images of the target type, for each category label in the category label library, a corresponding probability threshold may be determined in advance. When determining the probability threshold corresponding to each category label, a large number of sample images may be obtained, and then the probability threshold may be set based on the accuracy rate of the prediction results of the target detection model 11 on these sample images. Here, if the criterion for determining whether a sample image includes the object indicated by the category label is: "when the probability predicted by the target detection model 11 that the sample image includes the object indicated by the category label is greater than the probability threshold corresponding to the category label, then it is determined that the sample image includes the object indicated by the category label," then when detecting these sample images according to this criterion, the accuracy rate of the prediction results of the target detection model 11 on these sample images is greater than the preset accuracy threshold. Here, the accuracy threshold may be flexibly set based on the user's desired level of strictness of the criterion; for example, if a lower false detection rate is desired, the accuracy threshold may be set higher.

For example, taking the category label "person" as an example, a plurality of sample images including persons and not including persons may be acquired, and the target detection model 11 is used to predict the probability that these sample images include "person." If the probability is greater than the probability threshold, the image is considered to include "person." The probability threshold must be such that the accuracy rate of the prediction results of the target detection model 11 on these sample images is higher than the preset accuracy threshold. For example, assuming the preset accuracy threshold is 80% and the sample images consist of 100 images, the probability threshold must be such that the prediction results of the target detection model 11 are accurate for at least 80 of the 100 images.

In some embodiments, when determining the probability threshold corresponding to each category label in the category label library, a plurality of sample images may be acquired. These sample images carry labels indicating whether the sample image includes the object indicated by the category label. An initial threshold for the probability threshold may then be set, and the target detection model 11 is used to detect the sample images. When the probability predicted by the target detection model 11 that a sample image includes the object indicated by the category label is greater than the preset initial threshold, it is determined that the sample image includes the object indicated by the category label. The accuracy rate of the prediction results of the target detection model 11 at the initial threshold may then be computed based on the determination results corresponding to each of the plurality of sample images. It may then be determined whether the accuracy rate is lower than the preset accuracy threshold; if so, the initial threshold is adjusted, and based on the adjusted initial threshold, it is re-determined for each sample image whether it includes the object indicated by the category label. The above process is repeated until the accuracy rate of the prediction results of the target detection model 11 is higher than the preset accuracy threshold, at which point the final adjusted initial threshold is used as the probability threshold.

For example, taking the category label "person" as an example, an initial value of the probability threshold (e.g., 0.6) and an adjustment magnitude (e.g., 0.05) may first be set. Based on the probability predicted by the target detection model 11 that each sample image includes a person, if the probability is greater than 0.6, it is determined that the sample image includes a person, and based on the label of the sample image, it may be determined whether the prediction result for that sample image is accurate. After completing the prediction for all sample images, the accuracy rate of the prediction results may be computed. If the accuracy rate is less than the preset accuracy threshold (e.g., 0.8), the probability threshold may be increased, for example adjusted to 0.65, and the above steps are repeated until the accuracy rate of the final target detection model 11's prediction results on these sample images is greater than or equal to 0.8, at which point the adjusted probability threshold at that time is used as the final probability threshold.

In some embodiments, in order to improve the accuracy of setting the probability threshold corresponding to each category label, the sample images may cover both positive samples and negative samples, i.e., sample images that include the object indicated by the category label and sample images that do not include the object indicated by the category label. Moreover, the sample images may include some easily confused positive samples or negative samples. For example, taking the category label "person" as an example, the sample images may include some images containing sculptures, or dresses, and similar subjects that are easily confused by the target detection model 11, causing it to determine that the image contains a "person."

Considering that in most scenarios, the number of images to be detected may be large, and if the target detection model 11 is used one by one to predict, for each image to be detected, the probability that the image contains the object indicated by the category labels in the category label library, the detection speed may be relatively slow. To improve detection speed, the image-text conversion model may be used simultaneously in combination to detect the images to be detected. The image-text conversion model can directly convert the content of an image to be detected into a text description, and then it can be directly determined whether the text description includes a category label from the category label library, thereby determining whether the image to be detected includes the object indicated by that category label. It is evident that text matching is relatively simple, and this approach is more efficient than directly detecting the probability that the image to be detected contains various objects, thus improving detection speed. However, since image-text conversion models typically can only recognize the content of an image at a coarser granularity, i.e., what they describe is often the coarse-grained main subject of the image, they are unable to recognize and describe fine-grained objects. For example, taking the detection of non-compliant images as an example, suppose there is a portrait image exposing a specific body part; the image-text conversion model may typically only recognize the person in the image, but fail to recognize the exposed specific body part, and thus also fail to detect the non-compliant image. The target detection model 11, however, can precisely overcome the above shortcomings, i.e., the target detection model 11 can recognize objects of finer granularity in an image, but its detection speed is slower.

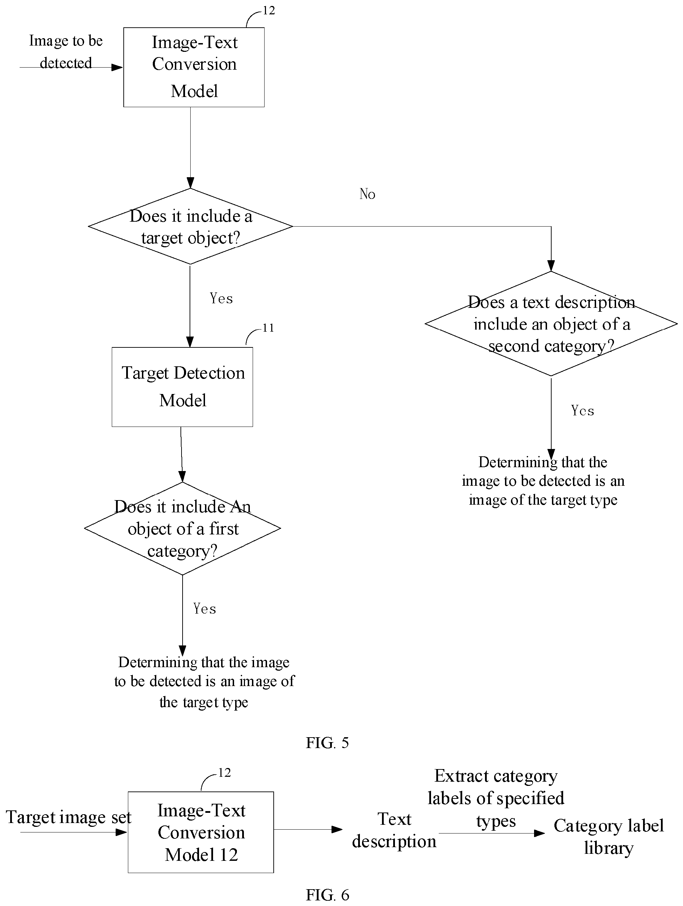

In order to both improve detection speed and improve the accuracy of detection results, in some embodiments, as shown in FIG. 5, detection of images may be performed by combining the two types of models described above. For example, the objects indicated by the category labels in the category label library may be divided into two categories: an object of the first category and an object of the second category. The proportion of the object of the first category in the image to be detected is generally small, for example, less than the preset first proportion; such an object tends to be a local region of a certain object, or some detail portion. The proportion of the object of the second category in the image to be detected is generally large, for example, greater than the preset second proportion, meaning such an object tends to be the main subject of the image. The first proportion and the second proportion may be the same or different.

For an object of the first category, since the image-text conversion model 12 may be unable to recognize it, the image-text conversion model 12 can be used to determine whether the image to be detected includes a target object of larger granularity that is more easily recognizable. Here, the presence of the target object in the image to be detected is a prerequisite for the presence of the object of the first category. In some embodiments, the object of the first category may be a local region of the target object. For example, the object of the first category may be an exposed body part, and the target object may be a person; the prerequisite for the image to be detected to include an exposed body part is that the image to be detected includes a person. Before using the target detection model 11 to detect the image to be detected, the image-text conversion model 12 may first be used to obtain a text description of the image to be detected, and then based on the text description, it is determined whether the image to be detected includes the target object. If it does not include the target object, this indicates that the image to be detected cannot possibly include the object of the first category, and the image need not be input into the target detection model 11 for further fine-grained object detection. If it is determined that the image to be detected includes the target object, the target detection model 11 may be further used to detect the image to be detected to further determine whether it includes the object of the first category.

By using the image-text conversion model 12 to make a preliminary determination of whether more fine-grained object detection needs to be performed on the image to be detected, if it is not needed, there is no need to use the target detection model 11 for detection; if it is needed, the target detection model 11 is further used for detection, which can greatly improve detection speed. In addition, since the detection results of the target detection model 11 also cannot guarantee 100% accuracy and some false detections exist, while the image-text conversion model 12 tends to produce more accurate recognition results for the main subject in an image, performing further detection based on the preliminary determination results of the image-text conversion model can also improve the accuracy of detection results to a certain extent.

In some embodiments, considering that an object of the second category, due to its large proportion in the image to be detected, is often the main subject of the image, it can be directly identified using the image-text conversion model 12. Therefore, when it is determined, based on the text description output by the image-text conversion model 12, that the image to be detected does not include the target object, it is possible to further determine, based on the text description, whether the image to be detected includes an object of the second category; if so, the image to be detected is determined to be an image of the target type. For a coarse-grained object of the second category, since the image-text conversion model 12 can already obtain relatively accurate detection results, detection can be performed directly through the image-text conversion model 12, thereby improving detection speed.

The image-text conversion model 12 may be any model capable of converting an image into text. The model may be a pre-trained open-source model, or it may be a self-trained model, and the embodiments of the present disclosure impose no limitation in this regard.

In some embodiments, considering that if the determination of whether the image to be detected is an image of the target type is based solely on the prediction results of the target detection model 11, erroneous determinations may occur due to the limited accuracy of the target detection model 11, in order to further improve the accuracy of the image detection results, the image-text conversion model 12 may also be used simultaneously to detect the image to be detected. For example, before determining that the image to be detected is an image of the target type, the image-text conversion model 12 may also be used to obtain the text description of the image to be detected, and then it is determined whether the text description includes a category label from the category label library; if the text description of the image to be detected includes a category label from the category label library, and the prediction probability that the image to be detected includes the object indicated by the category label as output by the target detection model 11 is greater than the probability threshold corresponding to the category label, then the image to be detected is determined to be an image of the target type.

By simultaneously combining the text description output by the image-text conversion model 12, and the prediction probability output by the target detection model 11, to determine whether the image to be detected is an image of the target type, the accuracy of the detection results can be greatly improved.

In some embodiments, the image-text conversion model 12 may be a BLIP-2 model, and the target detection model 11 may be a CLIP (Contrastive Language-Image Pretraining) model. The BLIP-2 model can recognize the main subject content of an image but cannot drill down to a finer-grained level (for example, it can only recognize whether there is a person in the image, but cannot recognize specific body parts of that person), whereas the CLIP model can output the probability that certain fine-grained objects are present in the current image-for example, the probability that a person is present is 0.95, and the probability that a specific body part is present is 0.9-but the CLIP model cannot recognize with 100% certainty whether an image includes a particular object. Taking the recognition of non-compliant images that expose specific body parts as an example, the BLIP-2 model can recognize whether the image to be detected includes a person, and the CLIP model can recognize more fine-grained specific body parts and output the probability that a specific body part is included. Therefore, the BLIP-2 model and the CLIP model can be combined for image recognition: the BLIP-2 model is first used to recognize whether a person is present, and if so, the CLIP model is used to determine whether certain body parts that should not be exposed are present, so as to determine whether the image is a non-compliant image.

In some embodiments, the category label library may be constructed manually by a user or may be constructed automatically. For example, considering that the same object may be named or described in a variety of ways, its category labels may also be expressed in a variety of ways. For example, the object "house" may be described as "residence," "building," "structure," and so on. Considering that the category labels constructed by the user themselves, the expression thereof may differ from the description manner output by the model, if the category labels constructed by the user are used directly, there may be a problem of inconsistency between the description manner output by the model and the expression of the category labels constructed by the user, resulting in erroneous determination.

For example, taking the image-text conversion model 12 as an example, assuming the image to be detected is input into the image-text conversion model 12 and the text description output by the image-text conversion model 12 is "a car is parked in front of a house," while the category label set by the user for the object "house" is "building," when determining whether the image to be detected contains a "house" based on the text description, the inconsistency in expressions between the two may result in a final determination that the image does not contain a "house." Similarly, for the target detection model 11, if the target detection model 11 outputs "the probability of a house is 0.9," while the category label set by the user for the object "house" is "building," this may also cause the model to ultimately determine that the image does not contain a "house," thereby resulting in erroneous recognition.

Therefore, a category label library adapted to the expression of the model can be constructed to avoid erroneous determinations caused by inconsistent expressions. For example, as shown in FIG. 6, in order to obtain category labels adapted to the image-text conversion model 12 described above, when constructing the category label library, a target image set may be acquired, where the images in the target image set are images of the target type; the images in the target image set may then be input into the image-text conversion model 12, and the image-text conversion model 12 generates a text description corresponding to each image; category labels of the specified type may then be extracted from the text description to construct the category label library. By extracting category labels that meet the requirements from the text descriptions output by the image-text conversion model 12, the constructed category labels are consistent with the expressions of the image-text conversion model 12, thereby reducing erroneous detections caused by inconsistent expressions.

In some embodiments, a similar approach may also be adopted for the target detection model 11 to obtain category labels adapted to the target detection model 11 described above. When constructing the category label library, a target image set may be obtained, where the images in the target image set are images of the target type; the images in the target image set may then be input into the target detection model 11, and the target detection model 11 outputs the probability that the image includes objects of each category label; category labels of the specified type may then be extracted from the category labels output by the target detection model 11 to construct the category label library.

By extracting category labels that meet the requirements from the category labels output by the target detection model 11, the constructed category labels are consistent with the category labels output by the target detection model 11 during the prediction process, thereby reducing erroneous detections caused by inconsistent expressions.

In some embodiments, in order to automatically extract category labels that match images of the target type, a user may first set a reference category label based on the characteristics of images of the target type, and the category label of the specified type may be consistent with the reference category label set by the user, or may be semantically identical to the reference category label set by the user.

In addition, considering that in most scenarios, the number of images to be detected may be large, if the target detection model is used one by one to predict, for each image to be detected, the probability that the image contains the object indicated by a category label in the category label library, the detection speed may be relatively slow. In order to improve the detection speed, one approach conceived by the applicant is to use an image-text conversion model in combination to detect the image to be detected. The image-text conversion model can directly convert the content of the image to be detected into a text description, and it can then be directly determined whether the text description includes a category label from the category label library, thereby determining whether the image to be detected contains the object indicated by that category label. It is evident that text matching is relatively simple, and this approach is somewhat more efficient than directly detecting the probability that the image to be detected contains various objects, thus improving detection speed. However, since the image-text conversion model can generally only recognize the content of an image at a coarse granularity-that is, it typically describes only the coarse-grained main subject of the image-it is unable to recognize and describe fine-grained objects. For example, taking the detection of non-compliant images as an illustration, suppose there is an image of a person exposing a specific body part; the image-text conversion model may typically only recognize the person in the image and be unable to recognize the exposed specific body part, thus also failing to detect the non-compliant image. The target detection model, on the other hand, can overcome the above-mentioned shortcoming-that is, the target detection model can recognize objects at a finer granularity in an image, but its detection speed is slower.

Based on this, the embodiments of the present disclosure provide an image detection method that can detect an image to be detected by combining a target detection model and an image-text conversion model, and by setting a corresponding detection sequence and approach, so as to both improve detection efficiency and ensure that detection results have a relatively high degree of accuracy.

The image detection method specifically includes the following steps:
acquiring an image to be detected;
using an image-text conversion model to obtain a text description of an image to be detected;
determining, based on the text description, whether the image to be detected includes a target object;
if yes, using the target detection model to predict the prediction probability that the image to be detected includes an object of the first category, and in the case where the prediction probability is greater than a preset probability threshold, determining that the image to be detected is an image of the target type; wherein the proportion of the object of the first category in the image to be detected is less than a preset first proportion, and the presence of the target object in the image to be detected is a prerequisite for the presence of the object of the first category in the image to be detected.

In some embodiments, the object of the first category is a local region of the target object.

In some embodiments, the method further comprises:
if it is determined based on the text description that the image to be detected does not include the target object, determining, based on the text description, whether the image to be detected includes an object of the second category, where the object of the second category occupies a proportion greater than a preset second proportion in the image to be detected;
if so, determining that the image to be detected is an image of the target type.

The specific implementation details of the above detection method may refer to the descriptions in the above embodiments and are not repeated here.

Corresponding to the image detection method embodiments provided by the embodiments of this specification, this specification also provides an image detection apparatus, the apparatus comprising:
an acquisition module, configured to acquire an image to be detected;
a prediction module, configured to use a target detection model to predict a prediction probability that the image to be detected includes an object indicated by a category label in a preset category label library;
a determination module, configured to determine that the image to be detected is an image of a target type if the prediction probability is greater than a probability threshold corresponding to the category label;
where, the probability threshold corresponding to a category label in the category label library is set based on an accuracy rate of prediction results of the target detection model on a plurality of sample images, and if the probability predicted by the target detection model that any sample image includes the object indicated by the category label is greater than the probability threshold corresponding to the category label, and it is determined that the sample image includes the object indicated by the category label, then the accuracy rate of the prediction results of the target detection model on the plurality of sample images is greater than a preset accuracy threshold.

For the implementation process of the functions and roles of each unit in the above apparatus, refer specifically to the implementation process of the corresponding steps in the above image detection method, which is not repeated here.

For apparatus embodiments, since they basically correspond to the method embodiments, reference may be made to the partial descriptions of the method embodiments where relevant. The apparatus embodiments described above are merely illustrative, and the units described as separate components may or may not be physically separate, and the components shown as units may or may not be physical units, i.e., they may be located in one place or distributed over a plurality of network units. Some or all of the modules may be selected according to actual needs to achieve the objectives of the embodiments of this specification. Those of ordinary skill in the art can understand and implement the same without creative effort.

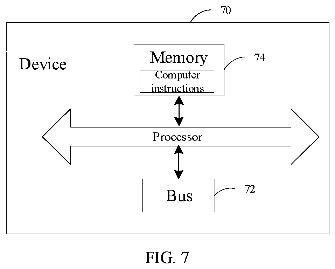

From the hardware level, as shown in FIG. 7, a hardware structure diagram of the device where the apparatus for determining the office area to which the device belongs according to the embodiments of this specification is located is illustrated; in addition to the processor 72 and memory 74 shown in FIG. 7, the device may generally also include other hardware, such as a forwarding chip responsible for processing packets; from the perspective of hardware structure, the device may also be a distributed device, possibly including a plurality of interface cards to support packet processing expansion at the hardware level. The memory 74 stores computer instructions, and the processor 72, when executing the computer instructions, implements the method mentioned in any of the above embodiments.

User information (including but not limited to user device information, user personal information, etc.) and data (including but not limited to data used for analysis, stored data, displayed data, etc.) involved in the present disclosure are information and data authorized by users or fully authorized by all parties, and the collection, use, and processing of relevant data shall comply with the relevant laws, regulations, and standards of the relevant regions, and corresponding operation entries are provided for users to choose to authorize or refuse.

Since the part of the present embodiments that contributes to the prior art, or all or part of the technical solution, may be embodied in the form of a software product, the computer software product is stored in a storage medium and includes a plurality of instructions to cause a terminal device to execute all or some of the steps of the methods of the various embodiments of this specification. The aforementioned storage medium includes: various media capable of storing program code, such as a USB flash drive, a mobile hard disk, a Read-Only Memory (ROM), a Random Access Memory (RAM), a magnetic disk, or an optical disk.

The embodiments of this specification further provide a computer program product comprising a computer program that, when executed by a processor, implements the method of any of the foregoing embodiments. The computer program is stored in a readable storage medium, at least one processor of an electronic device can read the computer program from the readable storage medium, and the at least one processor executes the computer program to cause the electronic device to execute the image detection method process in any of the above method embodiments, and the specific functions and achievable technical effects are not repeated here.

The foregoing descriptions are merely preferred embodiments of the embodiments of the present specification and are not intended to limit the embodiments of the present specification. Any modifications, equivalent replacements, improvements, and the like made within the spirit and principles of the embodiments of the present specification shall be included within the scope of protection of the embodiments of the present specification.

## Claims

1. An image detection method, wherein the method comprises:
acquiring an image to be detected;
using a target detection model to predict a prediction probability that the image to be detected contains an object indicated by a category label in a preset category label library;
if the prediction probability is greater than a probability threshold corresponding to the category label, then determining that the image to be detected is an image of a target type;
wherein, each category label in the category label library corresponds to one probability threshold, and the probability threshold corresponding to each category label is set based on an accuracy rate of prediction results of the target detection model on a plurality of sample images; for each category label, if a probability predicted by the target detection model that any sample image contains an object indicated by the category label is greater than the probability threshold corresponding to the category label, and it is determined that the sample image contains the object indicated by the category label, then the accuracy rate of the prediction results of the target detection model on the plurality of sample images is greater than a preset accuracy threshold.

2. The method of claim 1, wherein the probability threshold corresponding to each category label is set based on the accuracy rate of prediction results of the target detection model on a plurality of sample images, comprising:
acquiring the plurality of sample images containing labels, wherein the labels are used to indicate whether the sample images contain the object indicated by the category label;
in a case where the probability predicted by the target detection model that the sample image contains the object indicated by the category label is greater than a preset initial threshold, determining that the sample image contains the object indicated by the category label, and computing the accuracy rate of the prediction results of the target detection model at the initial threshold based on the determination results corresponding to each of the plurality of sample images;
in a case where the accuracy rate is determined to be lower than the preset accuracy threshold, continuously adjusting the initial threshold until the accuracy rate of the prediction results of the target detection model is higher than the preset accuracy threshold, and using the adjusted initial threshold as the probability threshold.

3. The method of claim 1, wherein an object indicated by a category label in the category label library comprises an object of a first category, and a proportion of the object of the first category in the image to be detected is less than a preset first proportion; the using a target detection model to predict the prediction probability that the image to be detected contains the object indicated by the category label in the category label library comprises:
using an image-text conversion model to obtain a text description of the image to be detected;
determining, based on the text description, whether the image to be detected includes a target object;
if yes, using the target detection model to predict the prediction probability that the image to be detected contains an object of the first category, wherein the presence of the target object in the image to be detected is a prerequisite for the presence of the object of the first category in the image to be detected.

4. The method of claim 3, wherein an object of the first category is a local region of the target object.

5. The method of claim 3, wherein an object indicated by a category label in the category label library comprises an object of a second category, and a proportion of the object of the second category in the image to be detected is greater than a preset second proportion; the method further comprises:
if it is determined based on the text description that the image to be detected does not contain the target object, determining based on the text description whether the image to be detected contains the object of the second category;
if so, determining that the image to be detected is an image of the target type.

6. The method of claim 1, wherein, before performing the step of determining that the image to be detected is an image of the target type if the prediction probability is greater than the probability threshold corresponding to the category label, the method further comprises:
obtaining a text description of the image to be detected using an image-text conversion model, and determining whether the text description includes a category label in the category label library;
determining that the image to be detected is an image of the target type if the prediction probability is greater than the probability threshold corresponding to the category label, comprises:
if the text description includes a category label from the category label library, and the prediction probability is greater than the probability threshold corresponding to the category label, then determining that the image to be detected is an image of the target type.

7. The method of any one of claims 1-6, wherein the category label library is constructed based on the following manner:
obtaining a target image set, wherein images in the target image set are images of the target type;
inputting the images in the target image set into an image-text conversion model, and extracting, from the image-text conversion model's output text descriptions of the images, category labels of specified types, to construct the category label library; and/or inputting the images in the target image set into the target detection model, and extracting, from the target detection model's output category labels, category labels of specified types, to construct the category label library.

8. The method of claim 7, wherein the category labels of the specified types are semantically identical or similar to reference category labels set by a user.

9. The method of claim 3 or 6, wherein the target detection model is a CLIP model, and the image-text conversion model is a BLIP-2 model.

10. An image detection method, wherein the method comprises:
acquiring an image to be detected;
using an image-text conversion model to obtain a text description of the image to be detected;
determining, based on the text description, whether the image to be detected includes a target object;
if yes, using a target detection model to predict a prediction probability that the image to be detected includes an object of a first category, and in the case where the prediction probability is greater than a preset probability threshold, determining that the image to be detected is an image of a target type;
wherein a proportion of the object of the first category in the image to be detected is less than a preset first proportion, and the image to be detected including the target object is a prerequisite for the image to be detected including the object of the first category.

11. An electronic device, wherein the electronic device comprises a processor and a memory, the memory stores a computer program, and the processor, when executing the computer program, is capable of implementing the method according to any one of claims 1-10.

12. A computer storage medium, wherein the computer storage medium stores a computer program, and when the computer program is executed by a processor, the method according to any one of claims 1-10 is implemented.

13. A computer program product comprising a computer program, wherein when the computer program is executed by a processor, the method of any one of claims 1-10 is implemented.
